# EUROPEAN PATENT APPLICATION

(11) **EP 4 227 031 A1**
(43) Date of publication of application: **16.08.2023**
(21) Application number: 23163838.8
(22) Date of filing: 14.02.2016
(51) Int. Cl.: B23B 51/02, B23B 51/00

(54) **HIGH EFFICIENCY STEP-STRUCTURED TWIST DRILL**

(62) Divisional of application: 16889695.9
(71) Applicant: Tec-Spiral Enterprises Tools Co., Ltd., Songjiang, Shanghai 201613 (CN)
(72) Inventor: WANG, Hongjia, Songjian District, Shanghai, 201612 (CN)
(74) Representative: Dilg, Haeusler, Schindelmann Patentanwaltsgesellschaft mbH

(57) **Abstract**

A high efficiency step-structured twist drill comprises a drill bit body (2). The drill bit body (2) comprises a shank portion and an operation portion. The shank portion is connected to the operation portion. The operation portion has a cutting portion at a front end thereof. A rear surface (3) of the cutting portion is provided with a plurality of flutes (4) arranged in parallel and spaced apart with each other. The flutes (4) divide a main cutting blade into a plurality of first cutting blades (5) and second cutting blades (6). The first cutting blades (5) and the second cutting blades (6) together form a step structure. When creating a hole, a drill bit of the twist drill requires a decreased drilling force, produces less heat, can be positioned easily, and has improved processing efficiency, such that the drilled hole has a high precision and less burrs at an edge where the drill bit exits.

## Description

### TECHNICAL FIELD

The present disclosure relates to an efficient twist drill for layered drilling.

### BACKGROUND

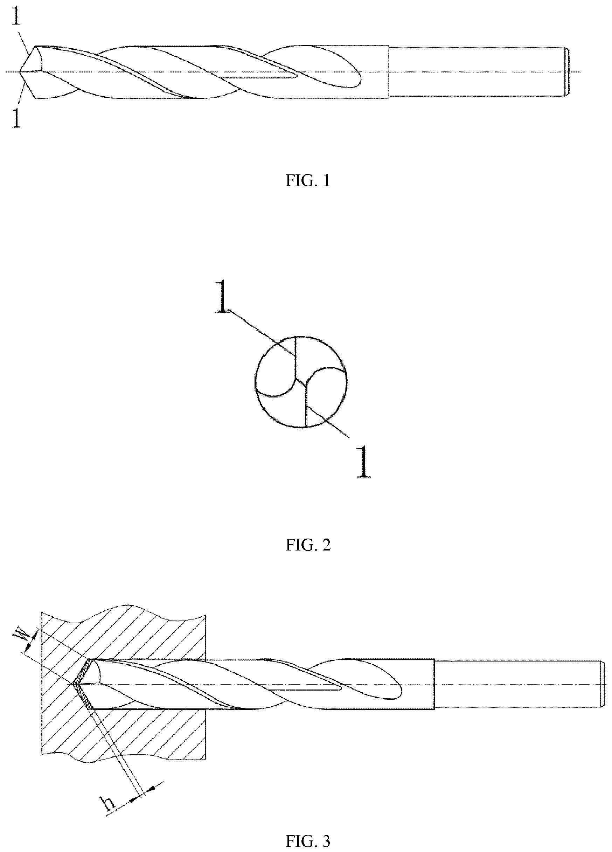

If a usual twist drill (comprising a straight shank and a taper shank), with reference to Fig. 1 (the straight shank), is used in a workplace away from a drilling machine and other metal cutting machine tools, when a handheld electric tool is used for drilling operation, the drilling efficiency is greatly constrained due to limitation of arm strength of a worker, power of the electric tool and the like, thereby resulting in difficult drilling positioning, low speed and low efficiency.

As shown in Fig. 1 , when the twist drill with such a conventional structure is used for drilling, the processing of a metal cutting amount in a corresponding size is simultaneously completed by two symmetrically distributed linear cutting blades so that a relatively large power is required during drilling. Meanwhile, relatively large reaction forces are also applied to two cutting edges so that the cutting edges are easy to be damaged. Processing and cutting processes of the twist drill are analyzed and shown in Fig. 2.

A traditional twist drill is not easy to be positioned during drilling. Two linear cutting blades always cut simultaneously during drilling. The traditional twist drill has an equal cutting metal amount in the entire processing process, has a relatively large cutting torque and power, and is hard to drill.

### SUMMARY

The purpose of the present disclosure is to provide a tool capable of cutting rapidly and drilling while prolonging service life of the tool and increasing operation efficiency. The above purpose is realized by the following technical solution:
An efficient twist drill for layered drilling comprises a drill bit body, wherein the drill bit body comprises a shank portion and an operation portion; the shank portion is connected with the operation portion; the operation portion has a cutting portion at a front end, wherein a plurality of flutes distributed in parallel and at intervals are symmetrically arranged along a flank surface of the cutting portion; the flutes divide main cutting blades into a plurality of first cutting blades and second cutting blades; and connecting lines of the first cutting blades and the second cutting blades form a step-like structure.

Preferably, the second cutting edges are parallel to an axis line of the drill bit body; and an angle of 90-140 degrees is formed between the first cutting blades and the second cutting blades.

Preferably, an acute angle is formed between the second cutting blades and the axis line of the drill bit body, so that tail ends of the second cutting blades are inclined downwards.

Preferably, an angle formed by connecting lines of top endpoints of the first cutting blades is 20-60 degrees.

Preferably, connecting lines of the flutes form a spiral structure.

Preferably, the first cutting blades are parallel to each other; and the first cutting blades are equal in height.

Preferably, the first cutting blades are parallel to each other; and heights of the first cutting blade of a first section to the first cutting blade of a last section is in a gradually increasing state.

Through step-like cutting, the twist drill can be positioned easily during layered drilling operation, has low cutting resistance, produces less cutting heat, has high drilling efficiency and long service life, and greatly improves drilling performance of the drill bit so that a processed circular hole has high precision and few burrs at an edge where the drill bit exits.

### BRIEF DESCRIPTION OF THE DRAWINGS

Fig. 1 is a structural schematic diagram of an existing twist drill, wherein cutting blades are two linear cutting edges;
Fig. 2 is a side view of Fig. 1;
Fig. 3 is a schematic diagram of cutting of cutting edges during drilling of an existing twist drill;
Fig. 4 is a partial enlarged view of Fig. 3;
Fig. 5 is a schematic diagram of the present disclosure;
Fig. 6 is a partial enlarged view of Fig. 5 ;
Fig. 7 is a side view of Fig. 5;
Fig. 8 is a partial enlarged view of Fig. 5;
Fig. 9 is a schematic diagram of the present disclosure during drilling;
Fig. 10 is a partial enlarged view of Fig. 9;
Fig. 11 is a schematic diagram of the present disclosure;
Fig. 12 is a side view of Fig. 11; and
Fig. 13 is another structural schematic diagram of a cutting portion of the present disclosure.

### DETAILED DESCRIPTION OF THE EMBODIMENTS

The present disclosure is described in detail below with reference to drawings.

A cutting area of an ordinary twist drill during drilling is generally described at first, as shown in Figs. 1-4.

An existing traditional twist drill is not easy to be positioned during drilling. Two linear cutting blades (i.e., main cutting blades 1) always cut simultaneously during drilling. The traditional twist drill has an equal cutting metal amount in the entire processing process, has a relatively large cutting torque and power, and is hard to drill. The traditional twist drill has a single-blade cutting area of S1= S2 = W × h and a total cutting area of S = 2S1 = 2S2 = 2 × W × h during drilling.

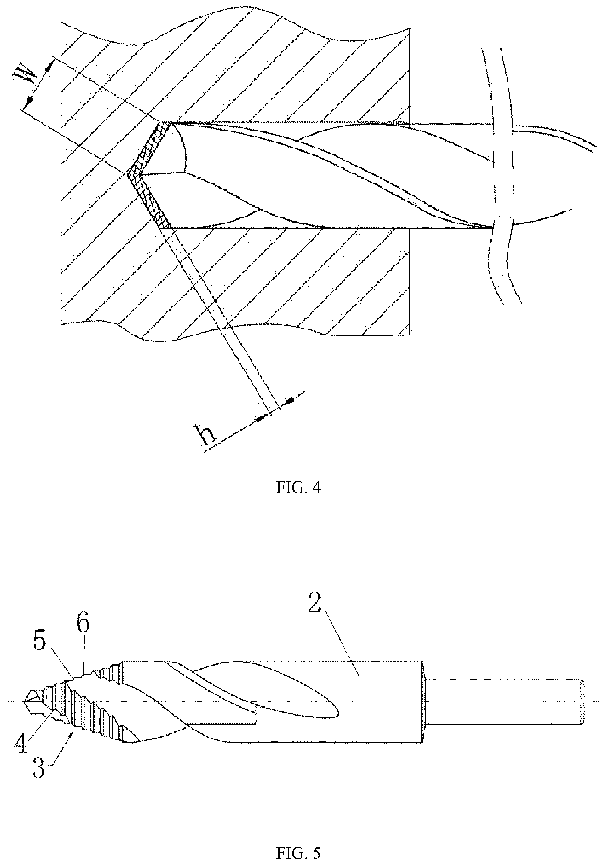

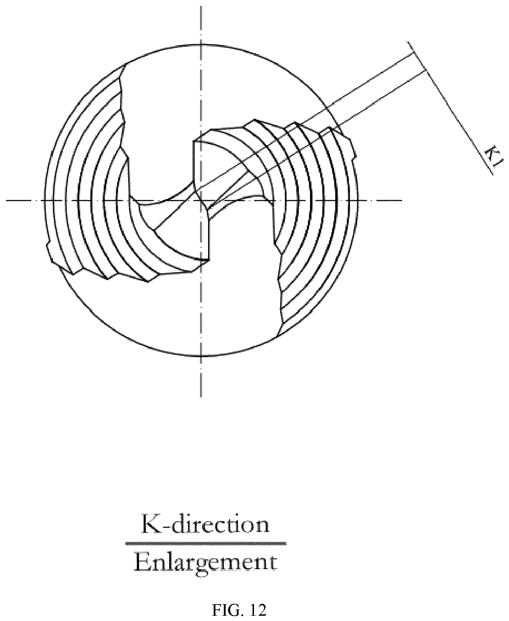

Then, a structure of the present disclosure is described in detail below, as shown in Figs. 5-12.

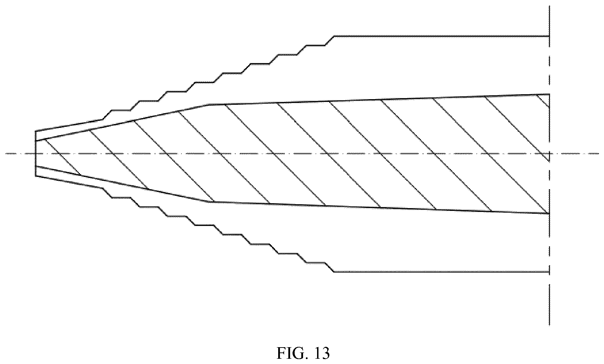

An efficient twist drill for layered drilling of the present disclosure comprises a drill bit body 2 which can be the ordinary twist drill. The drill body 2 usually comprises a shank portion and an operation portion; the operation portion has a cutting portion at a front end and a guide portion at a rear end; and the shank portion is connected with the guide portion. A plurality of flutes 4 distributed in parallel and at intervals are symmetrically arranged along a flank surface 3 of the cutting portion; the flutes 4 divide main cutting blades into a plurality of first cutting blades 5 and second cutting blades 6; and connecting lines of the first cutting blades 5 and the second cutting blades 6 form a step-like structure (which can also be called a ladder-like structure), i.e., the main cutting blades of the present disclosure are step-like structures. Meanwhile, a cross section of the entire flank surface 3 is also a step-like structure. Certainly, except the main cutting blades, all flank surface portions can also be of other shapes. The flank surface adopts a ladder-like structure so that the flank surface does not touch workpieces during cutting; secondly, the strength of the flank surface is enhanced; and thirdly, the flank surface is processed conveniently during manufacturing. The second cutting blades 6 are parallel to an axis line of the drill bit body, or an angle of 0-20 degrees is formed between the second cutting blades 6 and the axis line of the drill bit body so that tail ends of the second cutting blades 6 are inclined downwards, and only starting ends of the second cutting blades (i.e., tops of the first cutting blades) touch the workpieces during cutting, as shown in Fig. 13 .

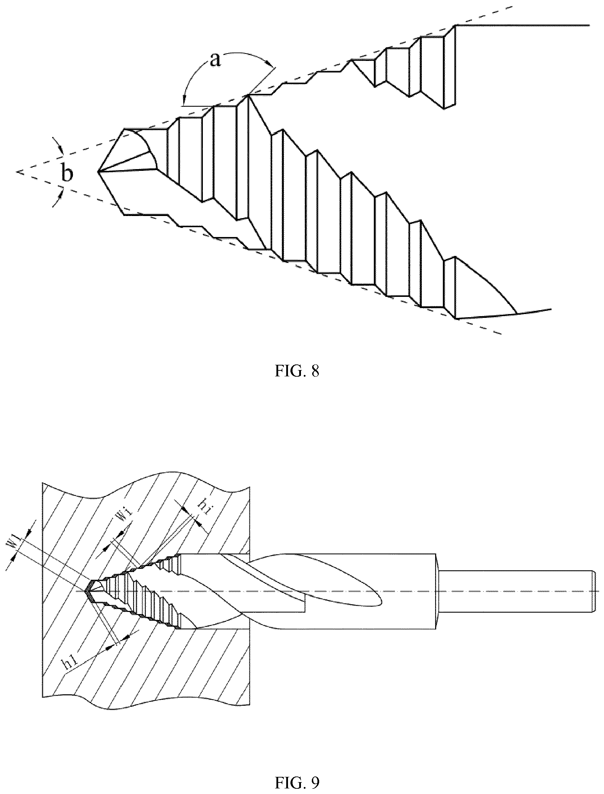

Preferably, the second cutting blades 6 are parallel to the axis line of the drill bit body; an angle a of 90-140 degrees is formed between the first cutting blades 5 and the second cutting blades 6; and the first cutting blades are parallel to each other, and certainly, can also be set to be unparallel structures according to actual needs. Preferably, the first cutting blades are parallel to each other in the present disclosure. Since flutes need to be dug in the flank surface to form the ladder-like main cutting blades, the area of the flank surface 3 will be set to be slightly larger, and an angle b formed by the connecting lines of the top endpoints of the first cutting blades 5 (i.e., the angle formed between two main cutting blades) is 20-60 degrees, as shown in Fig. 8. Certainly, a foremost end of the cutting portion of the present disclosure can also be set in a shape as shown in Fig. 13 .

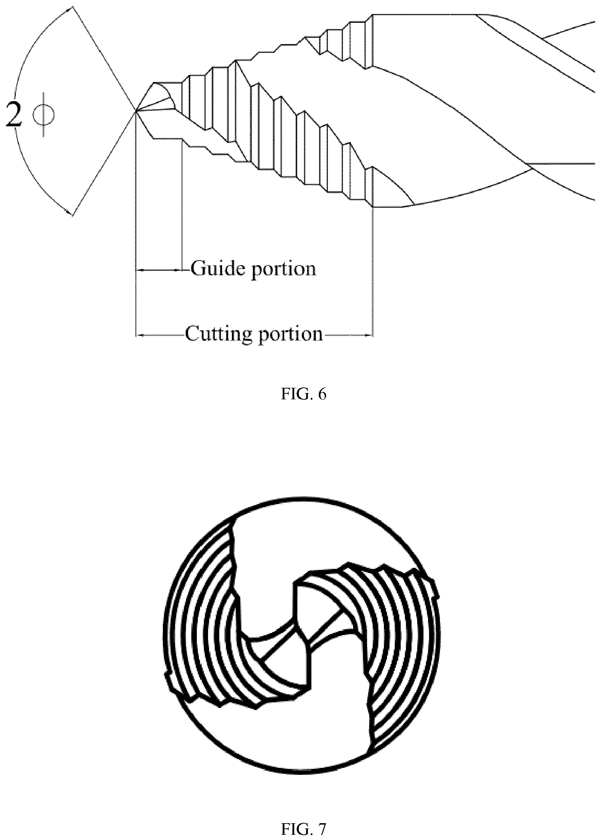

In order to drill stably, a guide portion (i.e., for the first cutting blade and the second cutting blade at the foremost end of the drill bit body, the first cutting blade is in contact with the workpiece at first) is formed at the foremost end of the drill bit body 2. An apex angle of the guide portion is an angle of 90-140 degrees, and preferably, 118 degrees is set as an optimal angle. Certainly, the angle of the guide portion can be changed properly according to different processing materials, as shown in Fig. 6 .

The cutting blades of the guide portion are relatively short, so the drilling will be relatively stable. Moreover, since the main cutting blades are divided into the first cutting blades with relatively small areas, the cutting torque and the power are dispersed by the first cutting blades so as to save efforts during drilling with force. It should be noted that the foremost first cutting blade in contact with the workpiece at first in the present disclosure may be unparallel to the subsequent first cutting blade.

The flutes of the present disclosure may be arc-shaped flutes adapted to a radian of the flank surface, or the connecting lines of the flutes form a spiral structure. The ladder-like cutting blade of the present disclosure can be applied to drilling cutting tools such as screw taps, expanding drills, countersink drills, reamers, etc. Even only one ladder-like drill bit is arranged, while the ladder-like drill bit can be combined with different cutting tools.

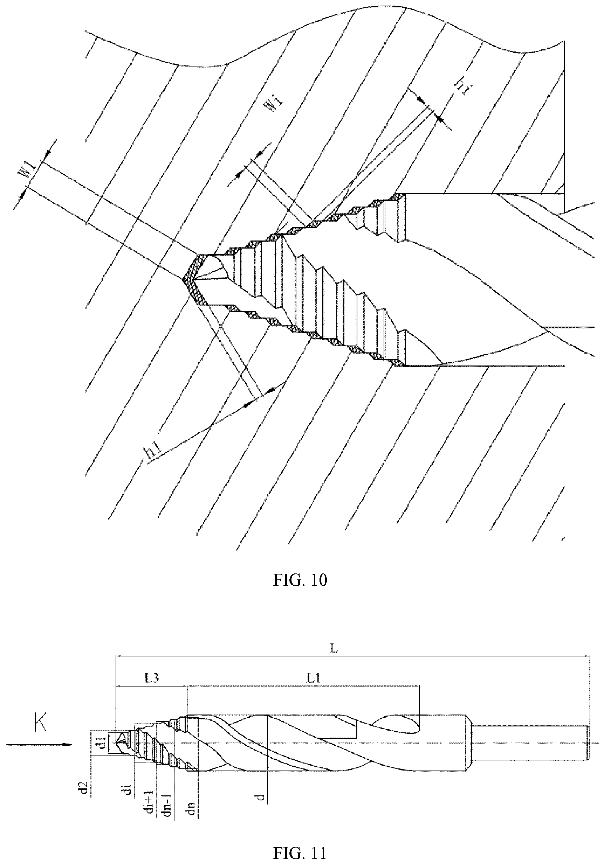

As shown in Fig. 11, the flank surface between the flutes forms a step-like circular arc; and a diameter d of the circular arc between the two opposite second cutting blades is gradually increased to form a step-like structure. For example, from a diameter d1 between the foremost second cutting blades to a diameter dn between the last second cutting blades, the diameters show a gradually increasing trend; and the increased size can be constant or variable.

In the present disclosure, the number of steps and the lengths of the first cutting blades and the second cutting blades can be flexibly selected according to the size of drilled holes and the area of the flank surface. In general, on the flank surfaces with the equal area, the more the number of the divided first cutting blades and second cutting blades is, the better. In this case, the smaller the contact area between the first cutting blades and the workpiece is, the smaller the resistance borne by the cutting tool during drilling is, and the easier the drilling is. In view of the above characteristics, the step-like cutting blades should be provided as many as possible; the diameter between the foremost second cutting blades should be set as small as possible, but the diameter between the foremost second cutting blades will be limited by a standard drill core thickness of the drill bit.

In the present disclosure, two linear main cutting blades of the twist drill are designed as a plurality of ladder-like blades to decompose the resistance of the to-be-cut metal layer. As shown in Figs. 9 and 10, a cut large block S is decomposed into n small blocks Si; the area of each small block Si is Si = Wi × hi, Sn = Wn × hi; and the total cutting area is S = S1 + ... + Si + ... + Sn.

When the drill bit starts to come into contact with the surface of the workpiece, a guide hole is first drilled by a very small drill point (i.e., the guide portion) of the first section. The small drill point is easy to be positioned and drill the small hole due to a small diameter. Then, the small hole is gradually expanded by a subsequent gradually-widened ladder blade until a final size of the twist drill is reached. In the gradual drilling and hole expanding processes, compared with the one-process continuous cutting of the linear cutting blade of a conventional twist drill, the cutting resistance is reduced and the feeding is easy and fast.

The beneficial effects brought by the technical solutions of the present disclosure are as follows:
(1) in the whole processing process, the drilling force is relatively small, uniform and reasonable;
(2) the artificial hand-held electric tools can be operated stably and durably;
(3) the drilling processing precision is ensured, and the occurrence of equipment and personal accidents is avoided;
(4) all the step-like cutting edges of the cutting tool are worn uniformly and consistently, thereby prolonging service of the cutting tool (about 3-8 times);
(5) unnecessary damage of the cutting tool during use and scrapped workpieces are reduced;
(6) the processing difficulty and cost are reduced, and processing efficiency is increased; and
(7) a flange has few burrs at an edge where the drill bit exits.

The above are only preferred embodiments of the present disclosure and are not intended to limit the embodiments of the present disclosure. Any modification, equivalent replacement, improvement and the like made within spirits and principles of the embodiments of the present disclosure should be included in a protection scope of embodiments of the present disclosure.

## Claims

1. An efficient twist drill for layered drilling, comprising
a drill bit body, wherein the drill bit body comprises a shank portion and an operation portion;
the shank portion is connected with the operation portion;
the operation portion has a cutting portion at a front end,
wherein a plurality of flutes distributed in parallel and at intervals are symmetrically arranged along a flank surface of the cutting portion;
the flutes divide main cutting blades into a plurality of first cutting blades and second cutting blades; and
connecting lines of the first cutting blades and the second cutting blades form a step-like structure.

2. The efficient twist drill for layered drilling according to claim 1, wherein the second cutting edges are parallel to an axis line of the drill bit body; and an angle of 90-140 degrees is formed between the first cutting blades and the second cutting blades.

3. The efficient twist drill for layered drilling according to claim 1, wherein an acute angle is formed between the second cutting blades and the axis line of the drill bit body, so that tail ends of the second cutting blades are inclined downwards.

4. The efficient twist drill for layered drilling according to claim 1, wherein an angle formed by connecting lines of top endpoints of the first cutting blades is 20-60 degrees.

5. The efficient twist drill for layered drilling according to claim 1, wherein connecting lines of the flutes form a spiral structure.

6. The efficient twist drill for layered drilling according to claim 1, wherein the first cutting blades are parallel to each other; and the first cutting blades are equal in height.

7. The efficient twist drill for layered drilling according to claim 1, wherein the first cutting blades are parallel to each other; and heights of the first cutting blade of a first section to the first cutting blade of a last section is in a gradually increasing state.

8. The efficient twist drill for layered drilling according to claim 1, wherein the operation portion has a further guide portion at a rear end, and the shank portion is connected with the guide portion.

9. The efficient twist drill for layered drilling according to claim 8, wherein a length (L1) of the guide portion at the rear end is larger than the length (L3) of the cutting portion at the front end.
